Europäisches Patentamt

European Patent Office

Office européen des brevets

(11) Veröffentlichungsnummer: **0 189 775
B1**

# (12) EUROPÄISCHE PATENTSCHRIFT

(45) Veröffentlichungstag der Patentschrift:
05.04.89

(21) Anmeldenummer: 86100374.7

(22) Anmeldetag: **13.01.86**

(51) Int. Cl.⁴: **H05G 1/10,** H05G 1/20

(54) **Wechselrichter.**

(30) Priorität: **25.01.85 DE 3502492**

(43) Veröffentlichungstag der Anmeldung:
**06.08.86 Patentblatt 86/32**

(45) Bekanntmachung des Hinweises auf die Patenterteilung:
**05.04.89 Patentblatt 89/14**

(84) Benannte Vertragsstaaten:
**DE FR**

(56) Entgegenhaltungen:
**EP-A- 0 047 957
EP-A- 0 102 532
EP-A- 0 108 336
FR-A- 2 408 970
US-A- 4 170 734**

(73) Patentinhaber: **Heimann GmbH, Weher Köppel 6,
D-6200 Wiesbaden 1(DE)**

(72) Erfinder: **Geus, Georg, Asternweg 56,
D-6200 Wiesbaden-Freudenberg(DE)**

(74) Vertreter: **Mehl, Ernst, Dipl.-Ing. et al, Postfach 22 13 17,
D-8000 München 22(DE)**

ACTORUM AG

## Beschreibung

Die Erfindung betrifft einen Wechselrichter, der dem Hochspannungstransformator eines Röntgengenerators vorgeschaltet ist, mit zwei Schalttransistoren, die einen Lastausgang wechselweise mit dem Plus- und Minus-Pol einer Gleichspannungsquelle verbinden.

Ein Wechselrichter dieser Art ist in der DE-OS 2 750 544 beschrieben. Dieser Wechselrichter bildet dabei einen Bestandteil eines Röntgendiagnostikgenerators, der aufgrund der Speisung des Hochspannungstransformators mit Mittelfrequenz hinsichtlich seines Hochspannungstransformators kleiner und leichter ausgebildet werden kann, als dies bei Speisung mit Netzfrequenz der Fall wäre. Der Hochspannungstransformator stellt dabei aufgrund der auf die Primärseite übersetzten Windungs- und Kabelkapazität eine kapazitive Last dar. Durch eine dazu passende Induktivität kann dabei für eine feste Ansteuerfrequenz ein Parallelschwingkreis gebildet werden. Der Wechselrichter steuert dabei im Ersatzschaltbild demgemäß einen Parallelschwingkreis mit seiner Resonanzfrequenz und veränderlichem Tastverhältnis. Durch Variation des Tastverhältnisses wird die Schwingkreisenergie und damit die Schwingamplitude verändert.

Bei einem Wechselrichter der genannten Art sind zwei kritische Betriebszustände zu beachten, in denen die Last einen Kurzschluß für den Wechselrichter darstellt. Diese kritischen Betriebszustände sind:

1. Der Einschaltmoment,
2. ein Kurzschluß der Hochspannung, z.B. bedingt durch einen Überschlag in der Röntgenröhre.

Der Erfindung liegt die Aufgabe zugrunde, einen Wechselrichter der eingangs genannten Art zu schaffen, der dauerkurzschlußfest ist und bei dem eine sehr schnelle Strombegrenzung erfolgt, so daß Folgeschäden im Hochspannungskreis vermieden sind.

Diese Aufgabe ist erfindungsgemäß dadurch gelöst, daß zwischen dem Lastausgang des Wechselrichters und den Schalttransistoren je eine Luftspule liegt und daß die beiden Verbindungspunkte der Luftspulen mit den Schalttransistoren über Dioden über Kreuz mit der Gleichspannungsquelle verbunden sind, welche so gepolt sind, daß sie die Gleichspannung sperren. Die Luftspulen begrenzen dabei die Stromsteilheit im Kurzschlußfall und deren Gegenkommutierung erfolgt über die Dioden. Wird parallel zu jeder Luftspule je ein RC-Glied geschaltet, so werden gegebenenfalls auftretende Hochfrequenz-Spitzen kurzgeschlossen.

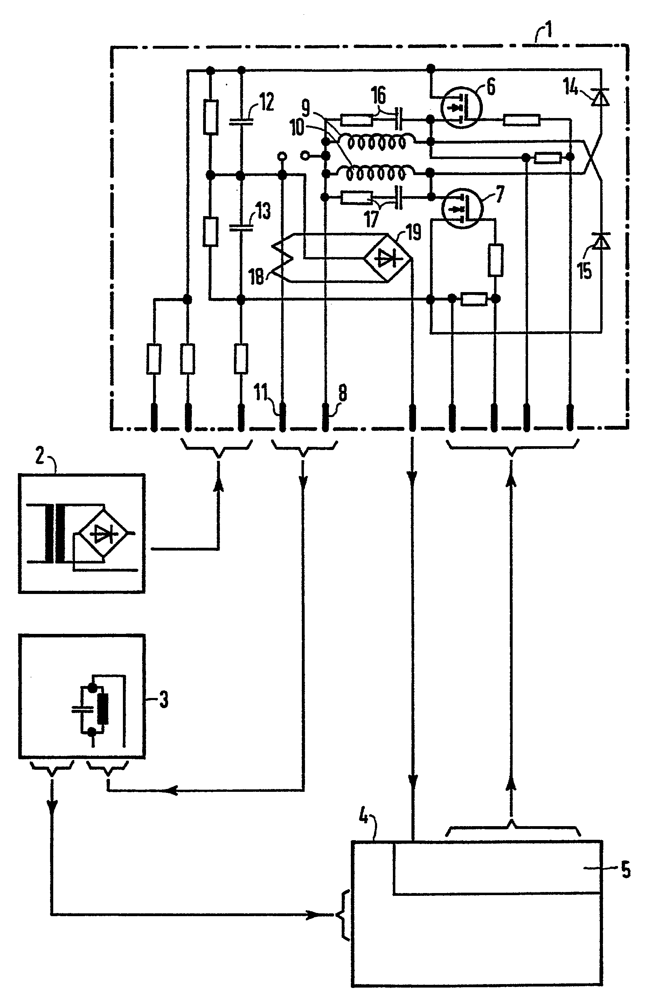

Die Erfindung ist nachfolgend anhand eines in der Zeichnung dargestellten Ausführungsbeispieles näher erläutert.

In der Zeichnung ist ein Wechselrichter 1 dargestellt, der vom Netz über ein Netzglied 2 gespeist wird, das einen Netztransformator und einen Gleichrichter aufweist. Die Last des Wechselrichters 1 wird von einem Röntgengenerator 3 gebildet, der einen Hochspannungstransformator aufweist, an dessen Primärwicklung der Wechselrichter 1 angeschlossen ist. Der Röntgengenerator 3 weist in der beschriebenen Weise einen Parallel-Schwingkreis für den Wechselrichter 1 auf. Ein Hochspannungsregler 4 dient zur Regelung des Spitzenwertes der Hochspannung über das Tastverhältnis des Wechselrichters 1. Hierzu weist der Hochspannungsregler 4 eine Steuerschaltung 5 für das Tastverhältnis zweier Schalttransistoren 6, 7 im Wechselrichter 1 auf, die mit einem Lastausgang 8 über zwei Luftspulen 9, 10 verbunden sind. Der zweite Lastausgang 11 liegt am gemeinsamen Pol zweier Gleichspannungsquellen, die von zwei Kondensatoren 12, 13 gebildet sind, welche vom Netzglied 2 aufgeladen werden. Die Verbindungspunkte der Luftspulen 9, 10 mit den Lastausgängen der Schalttransistoren 6, 7 sind über schnelle Dioden 14, 15 über Kreuz mit der Gleichspannungsquelle 12, 13 verbunden, welche so gepolt sind, daß sie die Gleichspannung an den Kondensatoren 12 und 13 sperren.

Die Wechselspannung an den Lastausgängen 8, 11 wird erzeugt, indem die Schalttransistoren 6, 7, die Feldeffekttransistoren sind, wechselweise in ihren niederohmigen Zustand geschaltet werden. Die Ansteuerung erfolgt dabei in der beschriebenen Weise durch die Steuerschaltung 5. Der Wechselrichter 1 stellt demgemäß eine Halbbrückenschaltung dar, die von den Kondensatoren 12, 13 und den Schalttransistoren 6, 7 gebildet ist. Die Stromsteilheit im Kurzschlußfall wird durch die Luftspulen 9, 10 begrenzt, die durch die schnellen Dioden 14, 15 gegenkommutiert werden. Parallel zu jeder Luftspule 9, 10 liegt je ein RC-Glied 16, 17, das gegebenenfalls auftretende HF-Spitzen kurzschließt.

Über eine Strommeßspule 18 und einen Brückengleichrichter 19 gelangt ein dem Laststrom proportionales Signal an den Hochspannungsregler 4. Es wird dort mit einem Referenzsignal verglichen. Überschreitet der Laststrom einen einstellbaren maximalen Wert, so wird der entsprechende Schalttransistor 6, 7 abgeschaltet.

Jeder Speisekreis des Wechselrichters 1, gebildet vom Schalttransistor 6 und dem Kondensator 13 bzw. dem Schalttransistor 7 und dem Kondensator 12, besitzt eine eigene Begrenzungsinduktivität, die nicht miteinander verkoppelt sind. Diese Begrenzungsinduktivitäten befinden sich im Querkreis zwischen den Schalttransistoren 6, 7. Das verhindert im Störungsfall, d.h. bei gleichzeitigem Durchsteuern beider Schalttransistoren 6, 7, deren Zerstörung durch Überstrom. Die Gegenkommutierung der Begrenzungsinduktivitäten erfolgt über die schnellen Dioden 14, 15. Dadurch werden die Schalttransistoren 6, 7 entlastet und die Funktionssicherheit des Wechselrichters 1 erhöht, so daß kein unzulässig hoher Inversstrom auftreten kann. Die Strombegrenzungsinduktivitäten sind als Luftspulen 9, 10 ausgeführt, so daß Kernverluste entfallen und der Wirkungsgrad gegenüber Eisenspulen verbessert wird. Bei dem in der Zeichnung dargestellten Röntgengenerator werden die Induktivitäten nicht wie bei normalen Schaltnetzteilen überwiegend mit einem Gleichfeld belastet. Das Magnetfeld wird in jeder Periode vollständig auf- und abgebaut. Bei einer Spule mit Kern und begrenztem Kernvolumen würden sehr große Verluste entstehen.

**Patentansprüche**

1. Wechselrichter (1), der dem Hochspannungstransformator eines Röntgengenerators (3) vorgeschaltet ist, mit zwei Schalttransistoren (6, 7), die einen Lastausgang (8) wechselweise mit dem Plus- und Minus-Pol einer Gleichspannungsquelle (12, 13) verbinden, dadurch gekennzeichnet, daß zwischen dem Lastausgang (8) und den Schalttransistoren (6, 7) je eine Luftspule (9, 10) liegt und daß die Verbindungspunkte der Luftspulen (9, 10) mit den Schalttransistoren (6, 7) über Dioden (14, 15) über Kreuz mit der Gleichspannungsquelle (12, 13) verbunden sind, welche so gepolt sind, daß sie die Gleichspannung sperren.

2. Wechselrichter nach Anspruch 1, dadurch gekennzeichnet, daß parallel zu jeder Luftspule (9, 10) je ein RC-Glied (16, 17) geschaltet ist.

**Claims**

1. Inverter (1), which is connected before the high voltage transformer of an X-ray generator (3), having two switching transistors (6, 7) which connect a load output (8) alternately with the plus and minus pole of a direct voltage source (12, 13), characterised in that there lies between the load output (8) and the switching transistors (6, 7) in each case an air-core coil (9, 10) and in that the connection points of the air-core coils (9, 10) are connected, with the switching transistors (6, 7), by way of diodes (14, 15) in cross connection to the direct voltage source (12, 13), which diodes are poled such that they block the direct voltage.

2. Inverter according to claim 1, characterised in that connected in parallel to each air-core coil (9, 10) there is, in each case, an RC element (16, 17).

**Revendications**

1. Onduleur (1) qui est disposé en amont du transformateur haute tension d'un générateur de rayons X (3), comprenant deux transistors de commutation (6, 7) qui relient une sortie de charge (8) alternativement au pôle positif et au pôle négatif d'une source de tension continue (12, 13), caractérisé en ce qu'une bobine sans fer (9, 10) est prévue entre la sortie de charge (8) et chacun des transistors de commutation (6, 7) et que les points de connexion des bobines sans fer (9, 10) aux transistors de commutation (6, 7) sont reliés tête-bêche à la source de tension continue (12, 13) à travers des diodes (14, 15) qui sont polarisées de manière qu'elles bloquent la tensions continue.

2. Onduleur selon la revendication 1, caractérisé en ce qu'une combinaison résistance-capacité (16, 17) est connectée en parallèle avec chaque bobine sans fer (9, 10).